# EUROPEAN PATENT APPLICATION

(11) **EP 4 834 470 A1**
(43) Date of publication of application: **04.11.2026**
(21) Application number: 24911909.0
(22) Date of filing: 03.10.2024
(51) Int. Cl.: B01J 20/26, B01D 53/14, B01J 20/28, C01B 32/50

(54) **ACID-GAS ADSORBENT, STRUCTURE PROVIDED WITH ACID-GAS ADSORBENT, AND ACID-GAS ADSORPTION DEVICE**

(30) Priority: 28.12.2023 JP 2023222484
(71) Applicant: Nitto Denko Corporation, Ibaraki-shi, Osaka 567-8680 (JP)
(72) Inventor: YAMAMOTO Mizuki, Ibaraki-shi, Osaka 567-8680 (JP); YASUI Tomoki, Ibaraki-shi, Osaka 567-8680 (JP); KONDO Rina, Ibaraki-shi, Osaka 567-8680 (JP)
(74) Representative: Hoffmann Eitle
(86) International application number: PCT/JP2024/035519
(87) International publication number: WO 2025/142015

(57) **Abstract**

The present invention provides an acid gas adsorbent suitable for reducing a decrease of the acid gas adsorption performance under a low-humidity environment. The acid gas adsorbent of the present invention includes: a polymer P having an amino group; and a liquid L having a boiling point of 130°C or higher. An adsorption amount a of carbon dioxide as determined by Adsorption Test A below performed on the acid gas adsorbent for 15 hours is 0.35 mmol/g or more.

Adsorption Test A: A gas mixture G1 composed of carbon dioxide, nitrogen, and water vapor is continuously supplied into a container containing the acid gas adsorbent. A concentration of the carbon dioxide in the gas mixture G1 is 400 vol ppm, and the gas mixture G1 has a temperature of 20°C and a humidity of 50%RH.

## Description

### TECHNICAL FIELD

The present invention relates to an acid gas adsorbent, a structure including an acid gas adsorbent, and an acid gas adsorption device.

### BACKGROUND ART

In recent years, carbon capture and storage (CCS) and carbon capture and utilization (CCU) have been considered in order to reduce the amount of carbon dioxide in atmospheric air. In CCS and CCU, in some cases, carbon dioxide is captured by separating carbon dioxide from atmospheric air.

As a method for separating acid gas such as carbon dioxide from atmospheric air, an adsorption method in which an acid gas is adsorbed by an adsorbent and thereby separated has been developed. The adsorbent used in the adsorption method can adsorb an acid gas by coming into contact with atmospheric air, for example.

The material of the adsorbent is, for example, an amine compound having a function of adsorbing an acid gas. For example, Patent Literature 1 discloses, as an adsorbent, fibrillated cellulose in which an amino group is introduced. Patent Literature 2 discloses an adsorbent in which an amino group is introduced inside a pore of a mesoporous material.

### CITATION LIST

### Patent Literature

Patent Literature 1: WO 2017/009241
Patent Literature 2: US Patent No. 7767004

### SUMMARY OF INVENTION

### Technical Problem

According to the studies conducted by the present inventors, adsorbents including an amine compound tend to exhibit decreased acid gas adsorption performance under low-humidity environments (e.g., 30%RH or less at 20°C). This tendency is particularly pronounced when the amine compound is a solid.

Therefore, the present invention aims to provide an acid gas adsorbent suitable for reducing a decrease of the acid gas adsorption performance under a low-humidity environment.

### Solution to Problem

The present invention provides an acid gas adsorbent including:
a polymer having an amino group; and
a liquid having a boiling point of 130°C or higher, wherein
an adsorption amount a of carbon dioxide as determined by Adsorption Test A below performed for 15 hours is 0.35 mmol/g or more:
   Adsorption Test A: a gas mixture G1 composed of carbon dioxide, nitrogen, and water vapor is continuously supplied into a container containing the acid gas adsorbent, where a concentration of the carbon dioxide in the gas mixture G1 is 400 vol ppm, and the gas mixture G1 has a temperature of 20°C and a humidity of 50%RH.

The present invention also provides a structure including:
the above acid gas adsorbent; and
an air flow path.

The present invention also provides an acid gas adsorption device including an adsorption part having a gas inlet and a gas outlet, wherein
the adsorption part contains the above acid gas adsorbent.

### Advantageous Effects of Invention

The present invention can provide an acid gas adsorbent suitable for reducing a decrease of the acid gas adsorption performance under a low-humidity environment.

### BRIEF DESCRIPTION OF DRAWINGS

FIG. 1 is a diagram for describing a method for measuring an adsorption amount of carbon dioxide adsorbed by an acid gas adsorbent.
FIG. 2A is a perspective view schematically showing an example of a structure including an acid gas adsorbent.
FIG. 2B is a perspective view schematically showing a modification of the structure including an acid gas adsorbent.
FIG. 3 is a graph showing the results of performing Adsorption Test B on acid gas adsorbents of Examples and Comparative Example.

### DESCRIPTION OF EMBODIMENTS

An acid gas adsorbent according to a first aspect of the present invention is an acid gas adsorbent including:
a polymer having an amino group; and
a liquid having a boiling point of 130°C or higher, wherein
an adsorption amount a of carbon dioxide as determined by Adsorption Test A below performed for 15 hours is 0.35 mmol/g or more:
   Adsorption Test A: a gas mixture G1 composed of carbon dioxide, nitrogen, and water vapor is continuously supplied into a container containing the acid gas adsorbent, where a concentration of the carbon dioxide in the gas mixture G1 is 400 vol ppm, and the gas mixture G1 has a temperature of 20°C and a humidity of 50%RH.

According to a second aspect of the present invention, for example, in the acid gas adsorbent according to the first aspect, the polymer is a solid.

According to a third aspect of the present invention, for example, in the acid gas adsorbent according to the first or second aspect, the polymer includes an amine polymer having a structural unit derived from an epoxy monomer.

According to a fourth aspect of the present invention, for example, in the acid gas adsorbent according to the third aspect, the amine polymer includes a reaction product of a compound group including an amine monomer and an epoxy monomer.

According to a fifth aspect of the present invention, for example, in the acid gas adsorbent according to the fourth aspect, the amine monomer includes polyethylenimine.

According to a sixth aspect of the present invention, for example, in the acid gas adsorbent according to any one of the first to fifth aspects, a glass transition temperature of the polymer is 40°C or lower.

According to a seventh aspect of the present invention, for example, in the acid gas adsorbent according to any one of the first to sixth aspects, the liquid includes an ionic liquid.

According to an eighth aspect of the present invention, for example, in the acid gas adsorbent according to the seventh aspect, the ionic liquid has temperature responsiveness.

According to a ninth aspect of the present invention, for example, in the acid gas adsorbent according to any one of the first to eighth aspects, a content of the liquid is 1 wt% to 15 wt%.

According to a tenth aspect of the present invention, for example, the acid gas adsorbent according to any one of the first to ninth aspects has a porous structure.

According to an eleventh aspect of the present invention, for example, in the acid gas adsorbent according to any one of the first to tenth aspects, an adsorption amount b1 of carbon dioxide as determined by Adsorption Test B below performed for 15 hours is 0.1 mmol/g or more:
Adsorption Test B: a gas mixture G2 composed of carbon dioxide, nitrogen, and water vapor is continuously supplied into a container containing the acid gas adsorbent, where a concentration of the carbon dioxide in the gas mixture G2 is 400 vol ppm, and the gas mixture G2 has a temperature of 20°C and a humidity of 20%RH.

According to a twelfth aspect of the present invention, for example, in the acid gas adsorbent according to the eleventh aspect, an adsorption amount b2 of carbon dioxide as determined by the Adsorption Test B performed for 1 hour is 0.01 mmol/g or more.

A structure according to a thirteenth aspect of the present invention includes:
the acid gas adsorbent according to any one of the first to twelfth aspects; and
an air flow path.

An acid gas adsorption device according to a fourteenth aspect of the present invention includes an adsorption part having a gas inlet and a gas outlet, wherein
the adsorption part contains the acid gas adsorbent according to any one of the first to twelfth aspects.

Hereinafter, the present invention will be described in detail. The following description is not intended to limit the present invention to a specific embodiment.

### <Embodiment of Acid Gas Adsorbent>

An acid gas adsorbent of the present embodiment includes: a polymer P having an amino group; and a liquid L having a boiling point of 130°C or higher. Owing to the combination of the polymer P and the liquid L, the acid gas adsorbent tends to reduce a decrease of the acid gas adsorption performance under a low-humidity environment (e.g., 30%RH or less at 20°C). The term "boiling point" herein refers to a boiling point under the atmospheric pressure (101.325 kPa). The term "liquid" refers to a substance that is in a liquid state at 20°C under the atmospheric pressure.

The acid gas adsorbent of the present embodiment exhibits adsorption performance sufficient for practical use under a high-humidity environment (e.g., more than 30%RH at 20°C). An adsorption amount a of carbon dioxide as determined by Adsorption Test A below performed on the acid gas adsorbent of the present embodiment for 15 hours is 0.35 mmol/g or more. In Adsorption Test A, a gas mixture G1 is used as a high-humidity gas.

Adsorption Test A: The gas mixture G1 composed of carbon dioxide, nitrogen, and water vapor is continuously supplied into a container containing the acid gas adsorbent, where a concentration of the carbon dioxide in the gas mixture G1 is 400 vol ppm, and the gas mixture G1 has a temperature of 20°C and a humidity of 50%RH.

### (Adsorption Test A)

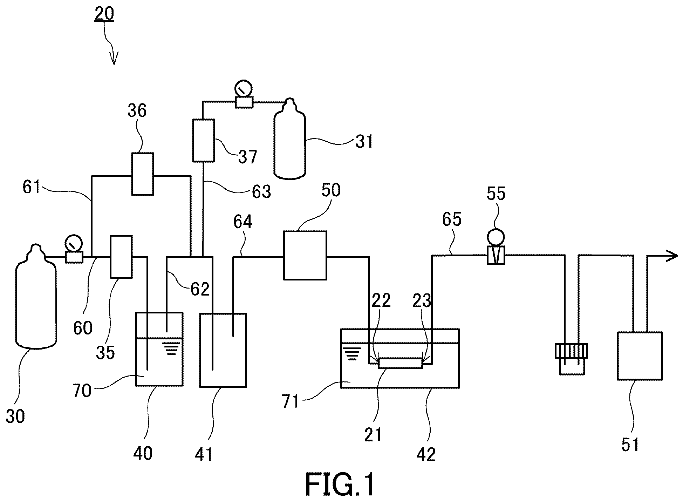

Hereinafter, the details of Adsorption Test A will be described. Adsorption Test A can be performed using a measurement device 20 shown in FIG. 1. The measurement device 20 includes a first tank 30 and a second tank 31. In one example, the first tank 30 stores dry nitrogen, and the second tank 31 stores a gas mixture of dry nitrogen and dry carbon dioxide. The concentration of carbon dioxide in the gas mixture in the second tank 31 is, for example, 5 vol%.

The measurement device 20 further includes a first container 40 containing water 70 and a first path 60 for supplying nitrogen from the first tank 30 to the first container 40. The first path 60 has one end connected to a gas outlet of the first tank 30 and the other end disposed in the water 70 in the first container 40. The nitrogen supplied from the first tank 30 to the first container 40 is humidified by contacting the water 70. A mass flow controller 35 for adjusting the flow rate of the nitrogen supplied from the first tank 30 to the first container 40 is disposed in the first path 60.

The measurement device 20 further includes a second container 41, a second path 62, and a bypass path 61. The second path 62 connects the first container 40 and the second container 41. The nitrogen supplied to the first container 40 and humidified is supplied to the second container 41 through the second path 62. The bypass path 61 branches from the first path 60 at a position between the first tank 30 and the mass flow controller 35, and is connected to the second path 62. A portion of the nitrogen supplied from the first tank 30 flows into the bypass path 61 and is supplied to the second container 41 through the second path 62. A mass flow controller 36 for adjusting the flow rate of the nitrogen supplied from the first tank 30 to the bypass path 61 is disposed in the bypass path 61.

The measurement device 20 further includes a third path 63 for supplying the gas mixture from the second tank 31 to the second path 62. The third path 63 has one end connected to a gas outlet of the second tank 31 and the other end connected to the second path 62. A mass flow controller 37 for adjusting the flow rate of the gas mixture supplied from the second tank 31 to the second path 62 is disposed in the third path 63. The gas mixture supplied to the second path 62 is supplied to the second container 41 through the second path 62.

The measurement device 20 further includes a third container 42 and a fourth path 64. The third container 42 contains water 71 and an adsorption part 21 disposed in the water 71. In the third container 42, the temperature of the water 71 is maintained at 20°C. The adsorption part 21 has a gas inlet 22 and a gas outlet 23. The adsorption part 21 functions as a container containing the acid gas adsorbent. The adsorption part 21 is configured so that the water 71 does not permeate into the interior thereof. The adsorption part 21 is typically a tube made of a hydrophobic resin, such as a fluorine resin (e.g., a tetrafluoroethylene-perfluoroalkoxyethylene copolymer (PFA)). In one example, the tube serving as the adsorption part 21 has an inner diameter of 4 mm and an outer diameter of 6 mm. The adsorption part 21 is configured to be attachable to and detachable from the measurement device 20.

The measurement device 20 can also be used as an acid gas adsorption device including the adsorption part 21. In another aspect, the present invention provides an acid gas adsorption device 20 including the adsorption part 21 having the gas inlet 22 and the gas outlet 23, the adsorption part 21 containing an acid gas adsorbent.

The fourth path 64 connects the second container 41 and the third container 42. Specifically, the fourth path 64 is connected to the gas inlet 22 of the adsorption part 21 in the third container 42. A first concentration meter 50 for measuring the concentration of carbon dioxide in the gas supplied to the adsorption part 21 is disposed in the fourth path 64. As the first concentration meter 50, a CO₂/H₂O gas analyzer LI-850-3 manufactured by LI-COR Inc. can be used.

The measurement device 20 further includes a fifth path 65 for discharging gas from the adsorption part 21 to the outside of the measurement device 20, the fifth path 65 being connected to the gas outlet 23 of the adsorption part 21. A back pressure valve 55 and a second concentration meter 51 are disposed in the fifth path 65. The pressure inside the adsorption part 21 can be adjusted to a constant value using the back pressure valve 55. The second concentration meter 51 can measure a concentration of carbon dioxide in the gas discharged from the adsorption part 21. As the second concentration meter 51, a CO₂/H₂O gas analyzer LI-850-3 manufactured by LI-COR Inc. can be used.

It is preferable that each path of the measurement device 20 be formed from metal or resin piping.

### [Pretreatment]

First, an acid gas adsorbent is prepared and subjected to a drying treatment. The drying treatment is preferably performed by treating the acid gas adsorbent for 2 hours or more under a vacuum atmosphere at 60°C. Next, the acid gas adsorbent having undergone the drying treatment is filled into the adsorption part 21 in a dry room having a dew point of about -60°C. The acid gas adsorbent filled into the adsorption part 21 weighs, for example, 50 mg. Next, the fourth path 64 and the fifth path 65 are connected to different ends of the adsorption part 21, and the adsorption part 21 is immersed in the water 71 in the third container 42.

Next, the nitrogen from the first tank 30 and the gas mixture from the second tank 31 are supplied to the second container 41 through the first path 60, the second path 62, the bypass path 61, and the third path 63 of the measurement device 20. In the second container 41, these gases are mixed to give a gas mixture G1 composed of carbon dioxide, nitrogen, and water vapor. In the second container 41, the concentration of carbon dioxide in the gas mixture G1 is adjusted to 400 vol ppm. The gas mixture G1 has a temperature of 20°C and a humidity of 50%RH. The gas mixture G1 is supplied to the adsorption part 21 through the fourth path 64 at a flow rate sufficient with respect to the weight of the acid gas adsorbent, for example, at a flow rate of 300 mL/min for 50 mg of the acid gas adsorbent. The pressure of the gas mixture G1 in the adsorption part 21 is adjusted to, for example, 107 kPa using the back pressure valve 55.

Next, while the gas mixture G1 is being supplied to the adsorption part 21, the adsorption part 21 is taken out of the third container 42 and immersed in a hot water bath (not shown) at 80°C for 2 hours or more. The immersion of the adsorption part 21 in the water bath is performed until the concentration of carbon dioxide measured by the first concentration meter 50 and the concentration of carbon dioxide measured by the second concentration meter 51 become substantially the same value. The pretreatment of the acid gas adsorbent in the adsorption part 21 is thus completed.

### [Adsorption Test]

Next, while the gas mixture G1 is being supplied to the adsorption part 21, the adsorption part 21 is taken out of the hot water bath and immersed in the water 71 in the third container 42. Thus, a carbon dioxide adsorption test (Adsorption Test A) of the acid gas adsorbent in the adsorption part 21 is started. The adsorption test is performed until 15 hours have elapsed from the start. Specifically, the gas mixture G1 is continuously supplied to the adsorption part 21 for 15 hours. When the acid gas adsorbent is subjected to the adsorption test for 15 hours, adsorption of carbon dioxide by the acid gas adsorbent can generally be regarded as having reached equilibrium.

In Adsorption Test A, an amount of substance M1 of carbon dioxide adsorbed by the acid gas adsorbent from the start to 15 hours is measured. The amount of substance of carbon dioxide adsorbed by the acid gas adsorbent can be calculated from a result of measuring, over time, the difference between the concentration of carbon dioxide measured by the first concentration meter 50 and the concentration of carbon dioxide measured by the second concentration meter 51. On the basis of the amount of substance M1, an amount of substance of carbon dioxide adsorbed by 1 g of the acid gas adsorbent in 15 hours is calculated, and the calculated value is determined as the adsorption amount a.

The adsorption amount a of carbon dioxide as determined by Adsorption Test A performed on the acid gas adsorbent of the present embodiment for 15 hours is preferably 0.4 mmol/g or more, and may be 0.5 mmol/g or more, 0.8 mmol/g or more, 1.0 mmol/g or more, 1.3 mmol/g or more, 1.5 mmol/g or more, 1.6 mmol/g or more, 1.7 mmol/g or more, 1.8 mmol/g or more, 1.9 mmol/g or more, 2.0 mmol/g or more, 2.1 mmol/g or more, 2.2 mmol/g or more, or even 2.3 mmol/g or more. The upper limit of the adsorption amount a of carbon dioxide is, for example, but not particularly limited to, 10 mmol/g or less.

### (Polymer)

In the acid gas adsorbent, the polymer P has a function of adsorbing an acid gas owing to the amino group. The polymer P preferably includes, as the amino group, at least one selected from the group consisting of a primary amino group, a secondary amino group, and a tertiary amino group. From the viewpoint of the acid gas adsorption performance, the polymer P preferably includes at least one selected from the group consisting of a primary amino group and a secondary amino group, and more preferably includes both a primary amino group and a secondary amino group. As amounts of substance of the primary amino group and the secondary amino group (particularly, the amount of substance of the primary amino group) increase in the polymer P, the density of nitrogen element in the acid gas adsorbent tends to increase and the adsorption amount of an acid gas (e.g., the above adsorption amount a) tends to increase. When the amounts of substance of the primary amino group and the secondary amino group (particularly, the amount of substance of the secondary amino group) are large in the polymer P, the acid gas adsorbent tends to easily desorb the adsorbed acid gas. The polymer P having a primary amino group and/or a secondary amino group enables a regeneration treatment of the acid gas adsorbent under relatively mild conditions. The polymer P may include a tertiary amino group, but may be free of a tertiary amino group.

In the present embodiment, in a near-infrared absorption spectrum (spectral data) obtained by performing near-infrared spectroscopy (NIR) on the polymer P, a ratio I_{A}/I_{B} of a peak intensity I_{A} of an absorption peak around a wavenumber of 4930 cm⁻¹ to a peak intensity I_{B} of an absorption peak around a wavenumber of 6500 cm⁻¹ is preferably 0.80 or more. Typically, when the polymer P includes a primary amino group and a secondary amino group, an absorption peak derived from the primary amino group and the secondary amino group is observed around a wavenumber of 6500 cm⁻¹, and an absorption peak derived from the primary amino group is observed around a wavenumber of 4930 cm⁻¹. Therefore, the ratio I_{A}/I_{B} can be used as a measure of the ratio of the amount of the primary amino group to the amount of the secondary amino group in the polymer P. The NIR analysis can be performed using a transparent test piece obtained by press-molding the polymer P. In this test piece, light scattering that may affect NIR results is less likely to occur.

The ratio I_{A}/I_{B} is more preferably 0.90 or more, and may be 0.95 or more, 1.00 or more, 1.05 or more, 1.10 or more, 1.15 or more, or even 1.20 or more. As the ratio I_{A}/I_{B} increases, the adsorption amount of an acid gas (e.g., the above adsorption amount a) tends to increase. The upper limit of the ratio I_{A}/I_{B} is, for example, but not particularly limited to, 1.50 or less.

A weight percent of nitrogen element in the polymer P is, for example, 5 wt% or more and preferably 10 wt% or more. The higher this weight percent is, the more the acid gas adsorption performance of the acid gas adsorbent tends to improve. The upper limit of the weight percent of nitrogen element in the polymer P is, for example, but not particularly limited to, 30 wt% or less. When all nitrogen element in the polymer P is derived from the amino group, the above weight percent of nitrogen element can be regarded as a weight percent of the amino group in the polymer P.

The density of nitrogen element in the polymer P is, for example, more than 12.0 mmol/g, preferably 12.2 mmol/g or more, and may be 12.5 mmol/g or more, 13.0 mmol/g or more, 13.5 mmol/g or more, 14.0 mmol/g or more, 14.5 mmol/g or more, 15.0 mmol/g or more, 15.5 mmol/g or more, 16.0 mmol/g or more, 16.5 mmol/g or more, 17.0 mmol/g or more, or even 17.5 mmol/g or more. The upper limit of the density of nitrogen element is, for example, but not particularly limited to, 30 mmol/g or less, and may be 20 mmol/g or less. The density of nitrogen element in the polymer P herein means an amount of substance of nitrogen element included in 1g of the polymer P. When all nitrogen element included in the polymer P is derived from the amino group, the density of nitrogen element can be regarded as the density of the amino group in the polymer P.

The density of nitrogen element in the polymer can be measured by the following method. First, the weight percent w (wt%) of nitrogen element included in the polymer P is measured by using a commercially available CHN elemental analyzer. From the result, the density d of nitrogen element can be calculated by the following equation. 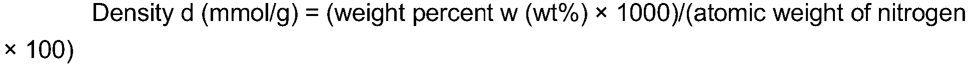 Density d (mmol/g) = (weight percent w (wt%) × 1000)/(atomic weight of nitrogen × 100)

The polymer P may include an additional functional group other than the amino group. Examples of the additional functional group include a hydroxyl group, an ether group, an ester group, and an amide group. The polymer P preferably includes an ether group as the additional functional group.

The polymer P preferably includes an amine polymer, particularly an amine polymer including a structural unit U1 derived from an epoxy monomer. This amine polymer may include a reaction product of a compound group including an amine monomer, particularly a reaction product P1 of a compound group including an amine monomer and an epoxy monomer.

As described above, the compound group for forming the reaction product P1 includes an amine monomer and an epoxy monomer. The reaction product P1 may be a polymer of a monomer group including an amine monomer and an epoxy monomer (particularly, a polymer of an amine monomer and an epoxy monomer). The reaction product P1 may be a product (crosslinked product) in which the amine monomer is crosslinked with the epoxy monomer. The crosslinked product of the amine monomer with the epoxy monomer tends to have not only a high density of nitrogen element but also high heat resistance and high moist heat resistance. When the reaction product P1 having a crosslinked structure is produced, it is preferable that at least one selected from the group consisting of the amine monomer and the epoxy monomer be a polyfunctional monomer that is a bi- or higher-functional monomer, particularly a tri- or higher-functional monomer.

The amine monomer is a monomer including at least one amino group, and preferably includes at least one primary amino group. The number of primary amino groups included in the amine monomer is preferably two or more, and may be three or more, or may be four or more. The upper limit of the number of primary amino groups is, for example, but not particularly limited to, 100 or less, and may be 10 or less. The amine monomer may include a secondary amino group and/or a tertiary amino group in addition to the primary amino group, but may be free of a tertiary amino group. In the amine monomer, the ratio of the number of primary amino groups to the number of all amino groups is, for example, but not particularly limited to, 10% or more, preferably 20% or more, more preferably 30% or more, and may be 40% or more. The higher this ratio is, the more crosslinking points there are in the amine monomer, and the denser the crosslinked structure in the reaction product P1 is. Consequently, the heat resistance and the moist heat resistance tend to improve. The upper limit of this ratio is, for example, but not particularly limited to, 80% or less, and may be 60% or less.

The molecular weight (in some cases, the weight-average molecular weight) of the amine monomer is, for example, 50 or more, and may be 100 or more, 150 or more, 200 or more, 300 or more, 500 or more, 1000 or more, or even 1500 or more. The higher the molecular weight of the amine monomer is, the easier it is to increase the density of nitrogen element in the reaction product P1. Moreover, the amine monomer having a large molecular weight tends to be safe to handle. The upper limit of the molecular weight of the amine monomer is, for example, 5000 or less, and may be 2000 or less. The molecular weight of the amine monomer is, in some cases, less than 1000, and may be 500 or less, or even 300 or less. The amine equivalent of the amine monomer is, for example, 10 g/eq. or more, preferably 20 g/eq. or more, and more preferably 30 g/eq. or more. The larger the amine equivalent of the amine monomer is, the easier it is to increase the density of nitrogen element in the reaction product P1. The upper limit of the amine equivalent of the amine monomer is, for example, but not particularly limited to, 200 g/eq. or less, and may be 150 g/eq. or less, 100 g/eq. or less, or even 50 g/eq. or less. The term "amine equivalent" herein means the mass of an amine monomer per equivalent of active hydrogen of a primary amino group included in the amine monomer. When the amine monomer includes a repeating unit (structural unit), the number of structural units included in the amine monomer (degree of polymerization) is, for example, but not particularly limited to, 5 to 100.

Examples of the amine monomer include: aliphatic amines such as ethylamine, ethylenediamine, 1,4-butylenediamine, 1,5-pentanediamine, 1,6-hexanediamine, 1,7-heptanediamine, 1,8-octanediamine, diethylenetriamine, triethylenetetramine, tetraethylenepentamine, pentaethylenehexamine, hexaethyleneheptamine, iminobispropylamine, bis(hexamethylene)triamine, 1,3,6-trisaminomethylhexane, tris(2-aminoethyl)amine, N,N'-bis(3-aminopropyl)ethylenediamine, polymethylenediamine, trimethylhexamethylenediamine, and polyether diamine; alicyclic amines such as isophorone diamine, menthane diamine, piperazine, N-aminoethylpiperazine, a 3,9-bis(3-aminopropyl)-2,4,8,10-tetraoxaspiro(5,5)undecane adduct, bis(4-amino-3-methylcyclohexyl)methane, bis(4-aminocyclohexyl)methane, and modified products of these; aliphatic polyamines such as polyethylenimine and polyalkylene polyamine; amino group-containing (meth)acrylic polymers such as aminoethylated acrylic polymers; and aliphatic polyamidoamines formed by a reaction between a polyamine and a dimer acid. The amine monomer preferably includes an aliphatic amine (particularly, triethylenetetramine (TETA)) and/or an aliphatic polyamine (particularly, polyethylenimine (PEI)), and particularly preferably includes PEI. The amine monomer can be used alone, or two or more amine monomers can be used in combination.

Aliphatic polyamines, particularly PEI, tend to be safe to handle. For example, it is preferable that amine monomers, such as aliphatic polyamines, not be classified as hazardous substances under the Fire Service Act and not be classified as substances subject to the Poisonous and Deleterious Substances Control Act. The amine monomer is preferably one that shows a negative result in a mutagenicity test (Ames test). The amine monomer is preferably one that is classified as a mild irritant or a moderate irritant in a skin irritation test (primary skin irritation test using rabbits).

The epoxy monomer is a monomer including at least one epoxy group. The number of epoxy groups included in the epoxy monomer is preferably two or more, and may be three or more, or may be four or more. The larger the number of epoxy groups is, the more crosslinking points there are in the epoxy monomer, and the denser the crosslinked structure in the reaction product P1 is. Consequently, the heat resistance and the moist heat resistance tend to improve. The upper limit of the number of epoxy groups included in the epoxy monomer is, for example, but not particularly limited to, 10 or less.

The molecular weight of the epoxy monomer is not limited in particular, and is, for example, less than 1000 and preferably 500 or less. The epoxy equivalent of the epoxy monomer is, for example, but not particularly limited to, 150 g/eq. or less and preferably 100 g/eq. or less. The smaller the epoxy equivalent of the epoxy monomer is, the more the density of nitrogen element in the reaction product P1 tends to increase. The lower limit of the epoxy equivalent of the epoxy monomer is, for example, but not particularly limited to, 50 g/eq. or more. The term "epoxy equivalent" means the mass of an epoxy monomer per equivalent of epoxy groups included in the epoxy monomer.

Examples of the epoxy monomer include: monofunctional epoxy compounds such as n-butyl glycidyl ether, higher alcohol glycidyl ether, allyl glycidyl ether, 2-ethylhexyl glycidyl ether, phenyl glycidyl ether, cresyl glycidyl ether, p-sec-butylphenyl glycidyl ether, and t-butylphenyl glycidyl ether; diepoxy alkanes such as 1,5-hexadiene diepoxide, 1,7-octadiene diepoxide, and 1,9-decadiene diepoxide; ether group-containing polyfunctional epoxy compounds such as (poly)ethylene glycol diglycidyl ether, (poly)propylene glycol diglycidyl ether, 1,4-butanediol diglycidyl ether, neopentyl glycol diglycidyl ether, 1,6-hexanediol diglycidyl ether, trimethylolpropane polyglycidyl ether, pentaerythritol polyglycidyl ether, and sorbitol polyglycidyl ether; and amino group-containing polyfunctional epoxy compounds such as N,N,N',N'-tetraglycidyl-m-xylenediamine and 1,3-bis(N,N-diglycidylaminomethyl)cyclohexane.

The epoxy monomer may be, in some cases, an aromatic epoxy resin, a nonaromatic epoxy resin, or the like. Examples of the aromatic epoxy resin include a polyphenyl-based epoxy resin, an epoxy resin including a fluorene ring, an epoxy resin including triglycidyl isocyanurate, and an epoxy resin including a hetero aromatic ring (e.g., a triazine ring). Examples of the polyphenyl-based epoxy resin include a bisphenol A epoxy resin, a brominated bisphenol A epoxy resin, a bisphenol F epoxy resin, a bisphenol AD epoxy resin, a stilbene epoxy resin, a biphenyl epoxy resin, a bisphenol A novolac epoxy resin, a cresol novolac epoxy resin, a diaminodiphenylmethane epoxy resin, and a tetrakis(hydroxyphenyl)ethane-based epoxy resin. Examples of the nonaromatic epoxy resin include an aliphatic glycidyl ether epoxy resin, an aliphatic glycidyl ester epoxy resin, an alicyclic glycidyl ether epoxy resin, an alicyclic glycidyl amine epoxy resin, and an alicyclic glycidyl ester epoxy resin.

The epoxy monomer can be used alone, or two or more epoxy monomers can be used in combination. When a monofunctional epoxy compound is used, the monofunctional epoxy compound is preferably used in combination with another epoxy monomer including two or more epoxy groups. The monofunctional epoxy compound can also be used as a reactive diluent for adjusting the viscosity of the compound group for forming the reaction product P1.

The epoxy monomer preferably includes an ether group-containing polyfunctional epoxy compound, such as ethylene glycol diglycidyl ether (EDE) or pentaerythritol tetraglycidyl ether (PETG). EDE and PETG have a small epoxy equivalent and can easily decrease a glass transition temperature Tg of the polymer P. These epoxy compounds also tend to be available at low cost. The epoxy monomer may include an amino group-containing polyfunctional epoxy compound such as N,N,N',N'-tetraglycidyl-m-xylenediamine or 1,3-bis(N,N-diglycidylaminomethyl)cyclohexane, together with or instead of an ether group-containing polyfunctional epoxy compound.

As described above, the polymer P as an amine polymer may include the structural unit U1 derived from the epoxy monomer. When the polymer P is the reaction product P1, the polymer P further includes a structural unit U2 derived from the amine monomer. A content of the structural unit U1 in the polymer P, particularly the reaction product P1, is, for example, 20 wt% to 70 wt%. A content of the structural unit U2 in the polymer P, particularly the reaction product P1, is, for example, 30 wt% or more and preferably 50 wt% or more. The upper limit of the content of the structural unit U2 is, for example, but not particularly limited to, 80 wt% or less.

The polymer P is preferably a solid. The term "solid" herein refers to a substance that is in a solid state at 20°C under the atmospheric pressure. The polymer P is preferably in a solid state in the range of 20°C to 80°C under the atmospheric pressure.

The glass transition temperature Tg of the polymer P is not limited to a particular value, and is, for example, 40°C or lower, and may be 30°C or lower, 20°C or lower, 15°C or lower, 10°C or lower, 5°C or lower, 0°C or lower, -1°C or lower, lower than -1°C, -2°C or lower, -3°C or lower, -4°C or lower, -5°C or lower, -6°C or lower, -7°C or lower, -8°C or lower, -9°C or lower, -10°C or lower, -11°C or lower, -12°C or lower, -13°C or lower, -14°C or lower, or even -15°C or lower. As the glass transition temperature Tg of the polymer P decreases, the speed at which the acid gas adsorbent adsorbs an acid gas tends to increase. From the viewpoint of, for example, sufficiently ensuring the acid gas adsorption performance of the acid gas adsorbent, providing heat resistance, and facilitating production of the acid gas adsorbent, the lower limit of the glass transition temperature Tg of the polymer P is, for example, -100°C or higher, and may be -50°C or higher, -30°C or higher, or even -20°C or higher. The glass transition temperature Tg herein refers to the midpoint glass transition temperature (T_{mg}) determined according to the standards of JIS K 7121:1987. The polymer P commonly corresponds to a thermosetting resin.

The weight-average molecular weight of the polymer P is, for example, but not particularly limited to, 500 or more, preferably 1000 or more, more preferably 10000 or more, even more preferably 100000 or more. The upper limit of the weight-average molecular weight of the polymer P is, for example, 10000000 or less.

The content of the polymer P in the acid gas adsorbent is, for example, 30 wt% or more, and may be 40 wt% or more, 50 wt% or more, 60 wt% or more, 70 wt% or more, 80 wt% or more, 85 wt% or more, or even 90 wt% or more. The higher the content of the polymer P is, the more the acid gas adsorption performance of the acid gas adsorbent tends to improve. The upper limit of the content of the polymer P in the acid gas adsorbent is, for example, but not particularly limited to, 99.9 wt% or less, and may be 99.5 wt% or less, 99 wt% or less, 97 wt% or less, 95 wt% or less, or even 93 wt% or less.

### (Liquid)

As described above, the acid gas adsorbent includes the liquid L having a boiling point of 130°C or higher. In the acid gas adsorbent, the liquid L is preferably present in the vicinity of the polymer P. In particular, it is preferable that a molecule of the liquid L be present between molecular chains of a plurality of the polymer P molecules. For example, in the acid gas adsorbent, the polymer P may be miscible with the liquid L, or may be swollen with the liquid L.

The boiling point of the liquid L is preferably 150°C or higher, and may be 180°C or higher, 200°C or higher, 230°C or higher, 250°C or higher, 280°C or higher, or even 300°C or higher. The upper limit of the boiling point of the liquid L is, for example, but not particularly limited to, 1000°C or lower, and may be 500°C or lower.

The liquid L preferably has high polarity and a high relative permittivity. The liquid L having high polarity is suitable for stabilizing an ion (e.g., a carbamate ion) formed by a reaction of the amino group included in the polymer P with an acid gas (e.g., carbon dioxide). By stabilizing this ion, the acid gas adsorption performance of the acid gas adsorbent tends to improve.

The liquid L preferably includes an ionic liquid. In particular, the acid gas adsorbent may include only an ionic liquid as the liquid L. The term "ionic liquid" herein refers to a salt (ionic compound) that is liquid at 20°C.

In another aspect, the present invention provides an acid gas adsorbent including:
the polymer P having the amino group; and
an ionic liquid, wherein
the adsorption amount a of carbon dioxide as determined by Adsorption Test A above performed for 15 hours is 0.35 mmol/g or more.

The ionic liquid preferably includes at least one selected from the group consisting of an imidazolium ion, a pyridinium ion, a pyrrolidinium ion, a phosphonium ion, an ammonium ion, and a sulfonium ion, more preferably includes at least one selected from the group consisting of an imidazolium ion and a phosphonium ion, particularly preferably includes a phosphonium ion. These ions preferably include a substituent having 1 or more carbon atoms.

Examples of the substituent having 1 or more carbon atoms include an alkyl group having 1 or more and 20 or less carbon atoms, a cycloalkyl group having 3 or more and 14 or less carbon atoms, and an aryl group having 6 or more and 20 or less carbon atoms. These substituents may be further substituted with a hydroxyl group, a cyano group, an amino group, a monovalent ether group, or the like. Examples of the ether group include polyalkylene glycol groups, such as polyethylene glycol.

Examples of the alkyl group having 1 or more and 20 or less carbon atoms include a methyl group, an ethyl group, an n-propyl group, an n-butyl group, an n-pentyl group, an n-hexyl group, an n-heptyl group, an n-octyl group, an n-nonyl group, an n-decyl group, an n-undecyl group, an n-dodecyl group, an n-tridecyl group, an n-tetradecyl group, an n-pentadecyl group, an n-hexadecyl group, an n-heptadecyl group, an n-octadecyl group, an n-nonadecyl group, an n-eicosadecyl group, an i-propyl group, a sec-butyl group, an i-butyl group, a 1-methylbutyl group, a 1-ethylpropyl group, a 2-methylbutyl group, an i-pentyl group, a neopentyl group, a 1,2-dimethylpropyl group, a 1,1-dimethylpropyl group, a t-pentyl group, a 2-ethylhexyl group, and a 1,5-dimethylhexyl group.

The above alkyl group may be substituted with a cycloalkyl group. The number of carbon atoms in the alkyl group substituted with a cycloalkyl group is, for example, 1 or more and 20 or less. Examples of the alkyl group substituted with a cycloalkyl group include a cyclopropylmethyl group, a cyclobutylmethyl group, a cyclohexylmethyl group, and a cyclohexylpropyl group.

Examples of the cycloalkyl group having 3 or more and 14 or less carbon atoms include a cyclopropyl group, a cyclobutyl group, a cyclopentyl group, a cyclohexyl group, a cycloheptyl group, a cyclooctyl group, a cyclododecyl group, a norbornyl group, a bornyl group, and an adamantyl group.

Examples of the aryl group having 6 or more and 20 or less carbon atoms include a phenyl group, a toluyl group, a xylyl group, a mesityl group, an anisyl group, a naphthyl group, and a benzyl group.

The phosphonium ion may be represented by the following formula (1).

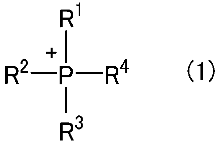

In the formula (1), R¹ to R⁴ are each independently the above-described substituent having 1 or more carbon atoms, and are each preferably an alkyl group having 1 or more and 20 or less carbon atoms. Preferable examples of R¹ to R⁴ include an n-butyl group, an n-hexyl group, and an n-tetradecyl group. Specific examples of the phosphonium ion include a tetrabutylphosphonium ion (P_{4,4,4,4}) and a trihexyltetradecylphosphonium ion (P_{6,6,6,14}).

The imidazolium ion may be represented by the following formula (2).

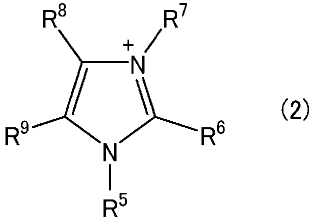

In the formula (2), R⁵ to R⁹ are each independently a hydrogen atom or the above-described substituent having 1 or more carbon atoms. The symbol R⁵ is preferably a substituent having 1 or more carbon atoms, more preferably an alkyl group having 1 or more and 20 or less carbon atoms, particularly preferably an ethyl group. The symbol R⁷ is preferably a substituent having 1 or more carbon atoms, more preferably an alkyl group having 1 or more and 20 or less carbon atoms, particularly preferably a methyl group. The symbols R⁸, R⁸, and R⁹ are each preferably a hydrogen atom. Specific examples of the imidazolium ion include a 1-ethyl-3-methylimidazolium ion (EMIm).

In the ionic liquid, the above ions may each form a salt with a counter anion. Examples of the counter anion include alkyl sulfonate, tosylate,
dimethylbenzenesulfonate, trifluoromethanesulfonate, acetate, bis(fluorosulfonyl)imide, bis(trifluoromethanesulfonyl)imide, thiocyanate, dicyanamide, tricyanomethanide, tetracyanoborate, hexafluorophosphate, tetrafluoroborate, halides, and amino acid ions (e.g., valinate).

Specific examples of the ionic liquid include tetrabutylphosphonium 2,4-dimethylbenzenesulfonate ([P_{4,4,4,4}][2,4MeSO₃]), trihexyl tetradecyl phosphonium valinate ([P_{6,6,6,14}]Val]), 1-ethyl-3-methylimidazolium tetrafluoroborate ([EMIm][BF_{4]}), 1-ethyl-3-methylimidazolium bis(trifluoromethanesulfonyl)imide ([EMIm][TFSI]), 1-ethyl-3-methylimidazolium bis(fluorosulfonyl)imide ([EMIm][FSI]), 1-ethyl-3-methylimidazolium dicyanamide, 1-butyl-3-methylimidazolium bromide, 1-butyl-3-methylimidazolium chloride, 1-butyl-3-methylimidazolium tetrafluoroborate, 1-butyl-3-methylimidazolium hexafluorophosphate, 1-butyl-3-methylimidazolium trifluoromethanesulfonate, 1-butyl-3-methylimidazolium tetrachloroferrate, 1-butyl-3-methylimidazolium iodide, 1-butyl-2,3-dimethylimidazolium chloride, 1-butyl-2,3-dimethylimidazolium hexafluorophosphate, 1-butyl-2,3-dimethylimidazolium tetrafluoroborate, 1-butyl-3-methylimidazolium bis(trifluoromethanesulfonyl)imide, 1-butyl-2,3-dimethylimidazolium bis(trifluoromethanesulfonyl)imide, 1-butyl-3-methylimidazolium trifluoro(trifluoromethyl)borate, 1-butyl-3-methylimidazolium tribromide, 1,3-dimesitylimidazolium chloride, 1,3-bis(2,6-diisopropylphenyl)imidazolium chloride, 1,3-diisopropylimidazolium tetrafluoroborate, 1,3-di-tert-butylimidazolium tetrafluoroborate, 1,3-dicyclohexylimidazolium tetrafluoroborate, 1,3-dicyclohexylimidazolium chloride, 1,2-dimethyl-3-propylimidazolium iodide, 1-hexyl-3-methylimidazolium chloride, 1-hexyl-3-methylimidazolium hexafluorophosphate, 1-hexyl-3-methylimidazolium tetrafluoroborate, 1-hexyl-3-methylimidazolium bromide, 1-methyl-3-propylimidazolium iodide, 1-methyl-3-n-octylimidazolium bromide, 1-methyl-3-n-octylimidazolium chloride, 1-methyl-3-n-octylimidazolium hexafluorophosphate, 1-methyl-3-[6-(methylsulfinyl)hexyl]imidazolium p-toluenesulfonate, 1-ethyl-3-methylimidazolium tricyanomethanide, 1-ethyl-3-methylimidazolium tetracyanoborate, and 1-(2-hydroxyethyl)-3-methylimidazolium bis(trifluoromethanesulfonyl)imide.

The ionic liquid preferably has temperature responsiveness. The term "temperature responsiveness" herein means that properties (in particular, solubility in water) vary with temperature variations. In particular, the ionic liquid preferably exhibits a lower critical solution temperature (LCST)-type phase separation behavior in water. Examples of the ionic liquid that exhibits an LCST-type phase separation behavior include [P_{4,4,4,4}][2,4MeSO₃] and [P_{6,6,6,14}][Val].

Whether or not the ionic liquid exhibits an LCST-type phase separation behavior in water can be confirmed, for example, by Test 1 and Test 2 below. Specifically, when the ionic liquid dissolves in water in Test 1 and does not dissolve in water and phase separation is confirmed in Test 2, the ionic liquid can be determined to exhibit an LCST-type phase separation behavior in water.

Test 1: An amount of 0.5 g of the ionic liquid is added to a container, such as a microtube, to which 0.5 g of 20°C water (ion-exchanged water) is added. The container is then sealed and shaken about 10 times by hand. After the container is allowed to stand for 1 minute, whether the ionic liquid is dissolved in the water in the container is visually examined.

Test 2: The same procedure as in Test 1 is performed, except that the temperature of the water is changed to 50°C. Whether the ionic liquid is dissolved in the water in the container is visually examined.

The ionic liquid does not necessarily have temperature responsiveness. For example, the ionic liquid may be one that dissolves in water in both Tests 1 and 2 above. Herein, an ionic liquid that dissolves in water in both Tests 1 and 2 is sometimes referred to as a "hydrophilic ionic liquid." Examples of the hydrophilic ionic liquid include [EMIm][BF₄].

The ionic liquid may be one that does not dissolve in water in both Tests 1 and 2 above and for which phase separation is confirmed. Herein, an ionic liquid that does not dissolve in water in both Tests 1 and 2 is sometimes referred to as a "hydrophobic ionic liquid." Examples of the hydrophobic ionic liquid include [EMIm][TFSI] and [EMIm][FSI].

The liquid L may include an aprotic polar solvent instead of or together with the ionic liquid. Specific examples of the aprotic polar solvent include dimethylformamide, dimethyl sulfoxide, and N-methylpyrrolidone.

A content of the liquid L in the acid gas adsorbent is, for example, 0.1 wt% or more, and may be 0.5 wt% or more, 1 wt% or more, 3 wt% or more, 5 wt% or more, 7 wt% or more, or even 10 wt% or more. As the content of the liquid L increases, a decrease of the acid gas adsorption performance of the acid gas adsorbent tends to be reduced under a low-humidity environment. Moreover, from the viewpoint of increasing the content of the polymer P having the function of adsorbing an acid gas, the content of the liquid L is preferably 70 wt% or less, and may be 60 wt% or less, 50 wt% or less, 40 wt% or less, 30 wt% or less, 20 wt% or less, or 15 wt% or less. The content of the liquid L in the acid gas adsorbent is preferably 1 wt% to 15 wt%.

### (Additional Component)

The acid gas adsorbent may be composed substantially only of the polymer P and the liquid L. The acid gas adsorbent may further include an additional component other than these. Examples of the additional component include a reaction accelerator, a plasticizer, a pigment, a dye, an anti-aging agent, a conductive material, an antistatic agent, an ultraviolet absorber, a flame retardant, and an antioxidant. The reaction accelerator can be used in synthesis of the polymer P. Examples of the reaction accelerator include: tertiary amines such as triethylamine and tributylamine; and imidazoles such as 2-phenol-4-methylimidazole, 2-ethyl-4-methylimidazole, and 2-phenol-4,5-dihydroxyimidazole. These reaction accelerators can accelerate a reaction for synthesizing the reaction product P1.

### (Acid Gas Adsorbent)

The weight percent of nitrogen element in the acid gas adsorbent is, for example, 1 wt% or more, and may be 5 wt% or more, or even 10 wt% or more. The higher this weight percent is, the more the acid gas adsorption ability of the acid gas adsorbent tends to improve. The upper limit of the weight percent of nitrogen element in the acid gas adsorbent is, for example, but not particularly limited to, 30 wt% or less. When all nitrogen element included in the acid gas adsorbent is derived from the amino group, the above weight percent of nitrogen element can be regarded as the weight percent of the amino group in the acid gas adsorbent.

The density of nitrogen element in the acid gas adsorbent is, for example, 10.0 mmol/g or more, and may be 11.0 mmol/g or more, 12.0 mmol/g or more, 12.2 mmol/g or more, 12.5 mmol/g or more, 13.0 mmol/g or more, 13.5 mmol/g or more, 14.0 mmol/g or more, 14.5 mmol/g or more, 15.0 mmol/g or more, 15.5 mmol/g or more, 16.0 mmol/g or more, 16.5 mmol/g or more, 17.0 mmol/g or more, or even 17.5 mmol/g or more. The upper limit of the density of nitrogen element in the acid gas adsorbent is, for example, but not particularly limited to, 30 mmol/g or less, and may be 20 mmol/g or less. Herein, the density of nitrogen element in the acid gas adsorbent means an amount of substance of nitrogen element included in 1 g of the acid gas adsorbent, and can be measured, for example, by the same method as described above for the density of nitrogen element in the polymer P. When all nitrogen element included in the acid gas adsorbent is derived from the amino group, the density of nitrogen element can be regarded as the density of the amino group in the acid gas adsorbent.

The shape of the acid gas adsorbent is not limited to a particular shape, and is, for example, a block shape, a sheet shape, or a particle shape. The term "particle shape" herein includes a spherical shape, an ellipsoid shape, a flake shape, a fiber shape, and the like.

The acid gas adsorbent may have a porous structure. For example, the acid gas adsorbent may include a porous body S including the polymer P and the liquid L. The shape of the porous body S is, for example, a block shape, a sheet shape, or a particle shape. The acid gas adsorbent may or may not include a porous resin sheet as the porous body S. The acid gas adsorbent may or may not include a member other than the porous body S, such as a support for supporting the polymer P. When the acid gas adsorbent does not include a support or the like, adjustment of the shape of the acid gas adsorbent tends to be easily achieved by cutting or machining.

The porous body S preferably has a three-dimensional network structure including the polymer P and the liquid L. The three-dimensional network structure may further include an additional component other than the polymer P and the liquid L. For example, in the porous body S, the three-dimensional network structure extends continuously. A pore included in the porous body S is preferably an interconnected pore extending three-dimensionally and continuously. The porous body S may have an isolated pore, or may have a through hole penetrating the porous body S.

The specific surface area of the acid gas adsorbent (the porous body S) is, for example, but not particularly limited to, 0.5 m²/g or more, and may be 1.0 m²/g or more, 2.0 m²/g or more, 3.0 m²/g or more, 4.0 m²/g or more, 5.0 m²/g or more, 6.0 m²/g or more, 7.0 m²/g or more, 8.0 m²/g or more, or even 9.0 m²/g or more. The larger the specific surface area of the acid gas adsorbent is, the faster the speed at which an acid gas is adsorbed by the acid gas adsorbent tends to be. The upper limit of the specific surface area of the acid gas adsorbent is, for example, but not particularly limited to, 100 m²/g or less. The specific surface area of the acid gas adsorbent refers to the BET (Brunauer-Emmett-Teller) specific surface area determined by nitrogen gas adsorption. The specific surface area of the acid gas adsorbent can be measured by a method in accordance with JIS Z 8830: 2013.

The pore volume of the acid gas adsorbent (the porous body S) is, for example, but not particularly limited to, 0.1 cm³/g or more, and may be 0.2 cm³/g or more, 0.3 cm³/g or more, 0.5 cm³/g or more, 1.0 cm³/g or more, or even 2.0 cm³/g or more. The upper limit of the pore volume of the acid gas adsorbent is, for example, but not particularly limited to, 5.0 cm³/g or less, and may be 4.0 cm³/g or less, or 3.0 cm³/g or less. The pore volume of the acid gas adsorbent can be measured by a mercury intrusion method. The mercury intrusion method is performed with an initial pressure of 21 kPa using a commercially available pore distribution analyzer (e.g., AutoPore V9620, manufactured by Micromeritics Instrument Corporation).

The average pore diameter of the acid gas adsorbent (the porous body S) is, for example, but not particularly limited to, 0.1 µm or more, and may be 0.2 µm or more, 0.3 µm or more, or even 0.5 µm or more. The upper limit of the average pore diameter of the acid gas adsorbent is, for example, but not particularly limited to, 50 µm or less. Herein, the average pore diameter of the acid gas adsorbent refers to a median diameter measured by a mercury intrusion method. The mercury intrusion method is performed with an initial pressure of 21 kPa using a commercially available pore distribution analyzer (e.g., AutoPore V9620, manufactured by Micromeritics Instrument Corporation).

When the acid gas adsorbent has a particle shape, the average particle diameter of the acid gas adsorbent is, for example, but not particularly limited to, 0.5 µm or more, preferably 1 µm or more, and may be 10 µm or more, 20 µm or more, or 30 µm or more. The average particle diameter of the acid gas adsorbent may be 200 µm or less, 100 µm or less, or less than 75 µm. Herein, the average particle diameter of the acid gas adsorbent refers to a particle diameter (d50) corresponding to a cumulative volume of 50% in a particle size distribution measured by a laser diffraction particle size analyzer or the like.

### (Acid Gas Adsorbent Manufacturing Method)

The method for producing the acid gas adsorbent of the present embodiment includes, for example, bringing the polymer P and the liquid L into contact.

For example, the polymer P can be synthesized by reacting a compound group including an amine monomer (particularly, an amine monomer including a primary amino group). This compound group preferably further includes an epoxy monomer including an epoxy group.

The compound group may include only an epoxy monomer E1 including two epoxy groups, or may include, instead of or together with the epoxy monomer E1, an epoxy monomer E2 including three or more epoxy groups, for example, four epoxy groups. When the compound group includes the epoxy monomers E1 and E2, a weight ratio E1/E2 of the epoxy monomer E1 to the epoxy monomer E2 is, for example, but not particularly limited to, 3/7 to 8/2, and may be 3/7 to 5/5, or even 3/7 to 4/6.

In the present embodiment, a ratio E/A of an equivalent E of the epoxy group in the compound group to an equivalent A of active hydrogen of the primary amino group in the compound group is preferably 1.00 or less. Specifically, a blending ratio of the amine monomer to the epoxy monomer is preferably adjusted such that the ratio E/A is 1.00 or less. In the compound group, the ratio E/A is preferably 0.90 or less, and may be 0.50 or less, less than 0.50, 0.45 or less, 0.40 or less, 0.35 or less, or even 0.30 or less. As the ratio E/A decreases, the ratio of the primary amino group in the polymer P increases and the density of nitrogen element in the acid gas adsorbent tends to increase. In terms of facilitating production of the acid gas adsorbent, the lower limit of the ratio E/A is, for example, 0.10 or more, and may be 0.15 or more, or even 0.20 or more.

In the present embodiment, it is preferable that in the compound group, the primary amino group of the amine monomer reacts with the epoxy group of the epoxy monomer, whereby a polymerization reaction or a crosslinking reaction proceeds. The reaction of the compound group can be carried out by applying energy to the compound group. The energy applied to the compound group is preferably thermal energy. For example, the reaction of the compound group can be caused to proceed by heating the compound group at a temperature of 40°C to 100°C. The energy applied to the compound group may be light energy.

In the present embodiment, a porous body including the polymer P may be produced. This porous body can be produced, for example, by the following method. First, the above compound group is mixed with a porogen to prepare a solution mixture. The porogen is a solvent capable of dissolving the monomers included in the compound group and capable of causing reaction-induced phase separation after the compound group has reacted. Specific examples of the porogen include: cellosolves such as methyl cellosolve and ethyl cellosolve; esters such as ethylene glycol monomethyl ether acetate and propylene glycol monomethyl ether acetate; glycols such as polyethylene glycol, polypropylene glycol, polybutylene glycol, and polyoxyalkylene glycols; and ethers such as polyoxyethylene monomethyl ether and polyoxyethylene dimethyl ether. Specific examples of polyoxyalkylene glycols include poly(1,2-butanediol)-6 propylene glycol and polyoxypropylene diglyceryl ether. The porogen may be a polar solvent such as ethyl acetate, N,N-dimethylformamide (DMF), acetonitrile, ethanol, or isopropanol; a nonpolar solvent such as toluene; or a solvent mixture thereof. The porogen can be used alone, or two or more porogens can be used in combination.

An additional component other than the compound group may be further added to the solution mixture. Examples of the additional component include the above reaction accelerators.

Next, the compound group is caused to react in the solution mixture. For example, the compound group is caused to react by filling a mold with the solution mixture and performing a heat treatment. A cured product including the polymer P and the porogen is obtained thereby. In the cured product, a co-continuous structure is formed as a result of phase separation of the polymer P and the porogen.

Next, the porogen is extracted and removed from the cured product. A porous body including the polymer P can be obtained thereby. The extraction of the porogen can be performed by immersing the cured product in a solvent. As this solvent, for example, water, an aliphatic hydrocarbon solvent, an aromatic hydrocarbon solvent, an aliphatic alcohol solvent, an ester solvent, an ether solvent, or a halogen-containing organic solvent can be used. Examples of the aliphatic hydrocarbon solvent include n-hexane, cyclohexane, methylcyclohexane, n-heptane, n-octane, isooctane, petroleum ether, and benzine. Examples of the aromatic hydrocarbon solvent include toluene, xylene, mesitylene, and benzene. Examples of the aliphatic alcohol solvent include methanol, ethanol, isopropanol, butanol, cyclohexanol, ethylene glycol, propylene glycol, propylene glycol monomethyl ether, and diethylene glycol. Examples of the ester solvent include ethyl acetate. Examples of the ether solvent include diethyl ether, diisopropyl ether, dibutyl ether, ethylene glycol dimethyl ether, ethylene glycol diethyl ether, propylene glycol dimethyl ether, propylene glycol diethyl ether, diethylene glycol dimethyl ether, tetrahydrofuran, dioxane, and anisole. Examples of the halogen-containing organic solvent include dichloromethane, chloroform, carbon tetrachloride, dichloroethane, and chlorobenzene. One of these solvents can be used alone, or two or more of these solvents can be used in combination.

The higher the reaction rate of the compound group is in production of the cured product, the more finely the porogen tends to be dispersed in the cured product. By removing the porogen from the cured product in which the porogen is finely dispersed, a porous body having a large specific surface area can be produced. The reaction rate of the compound group varies in accordance with, for example, the types and the blending ratio of the monomers included in the compound group. For example, the reaction rate of the compound group tends to be high, for example, when the epoxy monomer E2 including three or more epoxy groups, for example, four epoxy groups, is used or when a polyethylenimine having a high weight-average molecular weight is used as the amine monomer.

In the present embodiment, by bringing the polymer P (particularly, the porous body including the polymer P) and the liquid L into contact, for example, the polymer P and the liquid L become miscible with each other to give an acid gas adsorbent. The method for bringing the polymer P and the liquid L into contact is not limited to a particular method, and the polymer P and the liquid L can be brought into contact, for example, by the following method. First, a solution mixture of the liquid L and an alcohol is prepared. As the alcohol, a lower alcohol having 5 or less carbon atoms can be used. The content of the liquid L in the solution mixture is, for example, but not particularly limited to, 0.1 wt% to 20 wt%. Next, the polymer P and the liquid L can be brought into contact by immersing the polymer P in the solution mixture. The temperature of the solution mixture is, for example, room temperature (20°C). The time in which the polymer P is immersed in the solution mixture is, for example, but not particularly limited to, 0.5 hours to 24 hours.

After bringing the polymer P and the liquid L into contact, a drying treatment of the acid gas adsorbent may be further performed as necessary. By the drying treatment, for example, an alcohol derived from the above solution mixture can be removed from the acid gas adsorbent. The temperature of the drying treatment is not particularly limited as long as it is lower than the boiling point of the liquid L. The temperature of the drying treatment is, for example, 20°C to 60°C. The drying treatment time is, for example, 0.5 hours to 24 hours. The drying treatment may be performed under a reduced-pressure atmosphere or a vacuum atmosphere.

### (Properties of Acid Gas Adsorbent)

As described above, adsorbents including an amine compound tend to exhibit decreased acid gas adsorption performance under a low-humidity environment (e.g., 30%RH or less at 20°C). This tendency is presumed to be due to the fact that, under a low-humidity environment, there is little water in the vicinity of the amine compound and that reduces the mobility of the molecular chains of the amine compound and makes it difficult for an acid gas to diffuse within the adsorbent.

On the other hand, in the present embodiment, the acid gas adsorbent includes the polymer P and the liquid L. Due to the presence of the liquid L, the mobility of the molecular chains of the polymer P is less likely to decrease even under a low-humidity environment, and the diffusivity of an acid gas within the acid gas adsorbent is less likely to decrease. As a result, the acid gas adsorbent of the present embodiment tends to reduce a decrease of the acid gas adsorption performance under a low-humidity environment.

In one example, an adsorption amount b1 of carbon dioxide as determined by Adsorption Test B below performed on the acid gas adsorbent of the present embodiment for 15 hours is preferably 0.1 mmol/g or more. In Adsorption Test B, a gas mixture G2 is used as a low-humidity gas.

Adsorption Test B: A gas mixture G2 composed of carbon dioxide, nitrogen, and water vapor is continuously supplied into a container containing the acid gas adsorbent. A concentration of the carbon dioxide in the gas mixture G2 is 400 vol ppm, and the gas mixture G2 has a temperature of 20°C and a humidity of 20%RH.

Adsorption Test B can be performed in the same manner as Adsorption Test A described above, except that the gas mixture G2 is used instead of the gas mixture G1. The gas mixture G2 can be prepared by changing the flow rates of nitrogen passing through the first path 60 and the bypass path 61 of the measurement device 20 from the conditions of Adsorption Test A.

The adsorption amount b1 of carbon dioxide as determined by Adsorption Test B performed for 15 hours is preferably 0.3 mmol/g or more, and may be 0.5 mmol/g or more, 0.6 mmol/g or more, 0.7 mmol/g or more, 0.8 mmol/g or more, 0.9 mmol/g or more, 1.0 mmol/g or more, 1.1 mmol/g or more, 1.2 mmol/g or more, 1.3 mmol/g or more, 1.4 mmol/g or more, or even 1.5 mmol/g or more. The upper limit of the adsorption amount b1 of carbon dioxide is, for example, but not particularly limited to, 10 mmol/g or less.

An adsorption amount b2 of carbon dioxide as determined by Adsorption Test B above performed on the acid gas adsorbent of the present embodiment for 1 hour is preferably 0.01 mmol/g or more. The adsorption amount b2 can be used as a measure of the speed at which an acid gas is adsorbed under a low-humidity environment. That is, it can be said that the larger the adsorption amount b2 is, the higher the speed at which the acid gas adsorbent adsorbs an acid gas is under a low-humidity environment.

The adsorption amount b2 of carbon dioxide as determined by Adsorption Test B performed for 1 hour is preferably 0.03 mmol/g or more, and may be 0.05 mmol/g or more, 0.08 mmol/g or more, 0.1 mmol/g or more, 0.2 mmol/g or more, 0.3 mmol/g or more, 0.4 mmol/g or more, or even 0.5 mmol/g or more. The upper limit of the adsorption amount b2 of carbon dioxide is, for example, but not particularly limited to, 5 mmol/g or less.

An adsorption amount b3 of carbon dioxide as determined by Adsorption Test B above performed on the acid gas adsorbent of the present embodiment for 4 hours is preferably 0.05 mmol/g or more. The adsorption amount b3 can also be used as a measure of the speed at which an acid gas is adsorbed under a low-humidity environment. That is, it can be said that the larger the adsorption amount b3 is, the higher the speed at which the acid gas adsorbent adsorbs an acid gas is under a low-humidity environment.

The adsorption amount b3 of carbon dioxide as determined by Adsorption Test B performed for 4 hours is preferably 0.1 mmol/g or more, and may be 0.3 mmol/g or more, 0.4 mmol/g or more, 0.5 mmol/g or more, 0.6 mmol/g or more, 0.7 mmol/g or more, 0.8 mmol/g or more, 0.9 mmol/g or more, 1.0 mmol/g or more, or even 1.05 mmol/g or more. The upper limit of the adsorption amount b3 of carbon dioxide is, for example, but not particularly limited to, 5 mmol/g or less.

Furthermore, a desorption amount c of carbon dioxide as determined by Desorption Test C below performed on the acid gas adsorbent of the present embodiment is preferably 0.05 mmol/g or more.

Desorption Test C: The acid gas adsorbent having undergone Adsorption Test B for 15 hours is heated at 65°C for 1.5 hours while the gas mixture G2 is continuously supplied into the above container.

Desorption Test C can be performed by the following method. First, Adsorption Test B above is performed for 15 hours using the measurement device 20. Specifically, while the gas mixture G2 is being supplied to the adsorption part 21, the adsorption part 21 is immersed in the water 71 in the third container 42 and continuously supplied with the gas mixture G2 for 15 hours. Next, while the gas mixture G2 is continuously supplied to the adsorption part 21, the adsorption part 21 is taken out of the third container 42 and immersed in a hot water bath (not shown) at 65°C. A carbon dioxide desorption test (Desorption Test C) is thus started on the acid gas adsorbent in the adsorption part 21. The desorption test is performed until 1.5 hours have elapsed from the start.

In Desorption Test C, an amount of substance M2 of carbon dioxide desorbed from the acid gas adsorbent within 1.5 hours from the start is measured. The amount of carbon dioxide desorbed from the acid gas adsorbent can be calculated from a result of measuring, over time, the difference between the concentration of carbon dioxide measured by the first concentration meter 50 and the concentration of carbon dioxide measured by the second concentration meter 51. The amount of carbon dioxide desorbed within 1.5 hours from 1 g of the acid gas adsorbent is calculated from the amount of substance M2, and the calculated value is determined as the desorption amount c.

The desorption amount c of carbon dioxide as determined by performing Desorption Test C on the acid gas adsorbent of the present embodiment is preferably 0.1 mmol/g or more, and may be 0.3 mmol/g or more, 0.5 mmol/g or more, 0.6 mmol/g or more, 0.7 mmol/g or more, 0.8 mmol/g or more, 0.9 mmol/g or more, 1.0 mmol/g or more, 1.1 mmol/g or more, 1.2 mmol/g or more, 1.3 mmol/g or more, 1.4 mmol/g or more, or even 1.5 mmol/g or more. The upper limit of the desorption amount c of carbon dioxide is, for example, but not particularly limited to, 10 mmol/g or less.

A rate (65°C desorption rate) of the desorption amount c (mmol/g) to the adsorption amount b1 (mmol/g) is, for example, 40% or more, and may be 45% or more, 50% or more, 60% or more, 70% or more, 80% or more, 90% or more, 95% or more, 96% or more, or even 97% or more, or may be 100%.

### (Usage of Acid Gas Adsorbent)

The acid gas adsorbent of the present embodiment can adsorb an acid gas. Examples of the acid gas include carbon dioxide, hydrogen sulfide, carbonyl sulfide, sulfur oxides (SOx), hydrogen cyanide, and nitrogen oxides (NOx), and the acid gas is preferably carbon dioxide.

The acid gas adsorbent can be used in the following manner. First, a gas mixture including an acid gas is brought into contact with the acid gas adsorbent. The gas mixture preferably includes an additional gas other than the acid gas. Examples of the additional gas include nonpolar gases, such as hydrogen and nitrogen, and inert gases, such as helium, and the additional gas is preferably nitrogen. The gas mixture is typically atmospheric air. The gas mixture may be an off-gas from a chemical plant or thermal power generation.

The temperature of the gas mixture is, for example, room temperature (20°C). The concentration of the acid gas in the gas mixture is, for example, but not particularly limited to, 0.01 vol% (100 vol ppm) or more in a standard state (0°C, 101 kPa), preferably 0.04 vol% (400 vol ppm) or more, and may be 1.0 vol% or more. The upper limit of the concentration of carbon dioxide in the gas mixture is, for example, but not particularly limited to, 10 vol% or less in a standard state. The pressure of the gas mixture is typically equal to the atmospheric pressure in the environment in which the acid gas adsorbent is used. The gas mixture to be brought into contact with the acid gas adsorbent may be pressurized.

The acid gas adsorbent that has come into contact with the gas mixture adsorbs the acid gas included in the gas mixture. The operation of bringing the gas mixture into contact with the acid gas adsorbent is preferably performed until adsorption of the acid gas by the acid gas adsorbent reaches equilibrium.

Next, a regeneration treatment is performed on the acid gas adsorbent that has adsorbed the acid gas. The regeneration treatment can be performed by heating the acid gas adsorbent. The heating temperature of the acid gas adsorbent is, for example, 50 to 80°C. The acid gas adsorbent may be heated under a reduced-pressure atmosphere or a vacuum atmosphere. By heating the acid gas adsorbent, the acid gas desorbs from the acid gas adsorbent. The acid gas adsorbent is thereby regenerated, and can be used repeatedly. The acid gas, particularly carbon dioxide, desorbed from the acid gas adsorbent can be utilized as a raw material for synthesizing chemicals or as dry ice. The adsorption operation of the acid gas by the acid gas adsorbent and the regeneration treatment of the acid gas adsorbent can be performed using the above measurement device 20 (acid gas adsorption device).

### <Embodiment of Structure>

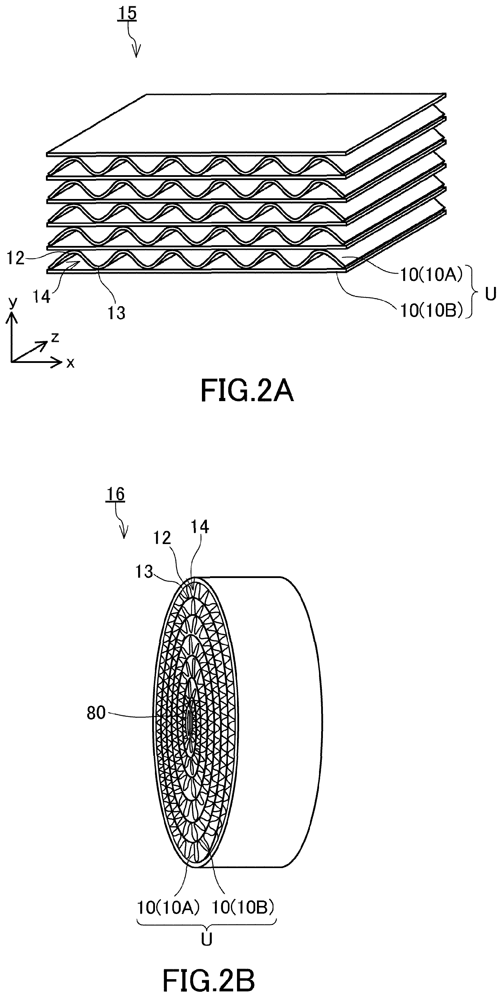

As shown in FIG. 2A, a structure 15 of the present embodiment includes an acid gas adsorbent 10 as described above and an air flow path 14. The structure 15 is typically a honeycomb structure having a plurality of the air flow paths 14 extending in the same direction.

The acid gas adsorbent 10 included in the structure 15 typically has a sheet shape. The structure 15 may include, together with the acid gas adsorbent 10, a support that supports the acid gas adsorbent 10, or may include no support.

The structure 15 preferably includes an adsorbent unit U in which an acid gas adsorbent 10A having a corrugated shape and an acid gas adsorbent 10B having a flat plate shape are stacked. In the acid gas adsorbent 10A, a plurality of crest portions 12 and a plurality of trough portions 13 are alternately arranged. The air flow path 14 is provided between the crest portion 12 or the trough portion 13 of the acid gas adsorbent 10A and the acid gas adsorbent 10B. In the present embodiment, a direction x is a direction (wave direction) in which the plurality of crest portions 12 and the plurality of trough portions 13 of the acid gas adsorbent 10A are alternately arranged. A direction y is a direction in which the acid gas adsorbents 10A and 10B are stacked in the adsorbent unit U. The direction z is a direction orthogonal to each of the directions x and y and in which the air flow paths 14 extend.

The structure 15 preferably includes a plurality of the adsorbent units U. The number of adsorbent units U in the structure 15 is, for example, but not particularly limited to, 2 to 100. In the structure 15, the plurality of adsorbent units U are stacked in the direction y such that the plurality of acid gas adsorbents 10A and the plurality of acid gas adsorbents 10B are alternately arranged. Since the plurality of adsorbent units U are stacked, the structure 15 has a block shape.

Each air flow path 14 is a through hole penetrating the structure 15 in the direction z. The air flow path 14 is surrounded by the acid gas adsorbents 10A and 10B. In the structure 15, an acid gas is efficiently adsorbed by the acid gas adsorbents 10A and 10B while moving in the direction z through the air flow path 14.

In the structure 15, as the thicknesses of the acid gas adsorbents 10A and 10B decrease, the cross-sectional area of each air flow path 14 can be increased. The structure 15 including the air flow path 14 having a large cross-sectional area is suitable for reducing a pressure loss that occurs, for example, upon contact with an acid gas. The structure 15 for which a pressure loss is reduced can reduce the power of a fan used to move an acid gas. It should be noted that when an amount of substance of the amino group per unit volume of the acid gas adsorbent 10 is large, sufficient adsorption of an acid gas tends to be achieved even when the thickness of the acid gas adsorbent 10 is small.

### <Modification of Structure>

The shape of the structure 15 including the acid gas adsorbent 10 is not limited to the one shown in FIG. 2A. A structure 16 shown in FIG. 2B has a shape in which one adsorbent unit U is wound on a central tube 80. Except for this, the configuration of the structure 16 is the same as that of the structure 15.

The structure 16 has a columnar shape. In the structure 16, the plurality of crest portions 12 and the plurality of trough portions 13 of the acid gas adsorbent 10A are alternately arranged in a circumferential direction of the structure 16. The air flow path 14 provided between the crest portion 12 or the trough portion 13 of the acid gas adsorbent 10A and the acid gas adsorbent 10B penetrates the structure 16 in a direction in which the central tube 80 extends. In the structure 16, an acid gas is efficiently adsorbed by the acid gas adsorbents 10A and 10B while moving through the air flow path 14 in the direction in which the central tube 80 extends.

### EXAMPLES

Hereinafter, the present invention will be described in more detail by way of Examples and Comparative Example, but the present invention is not limited to these.

### (Comparative Example 1)

First, 1.50g of poly(1,2-butanediol)-6 propylene glycol (UNIOL (registered trademark) PB-500 manufactured by NOF CORPORATION) and 0.64g of a copolymer (UNIOL (registered trademark) PB-700 manufactured by NOF CORPORATION) of butylene glycol and propylene glycol were added to a 6 mL screw cap vial (manufactured by AS ONE Corporation). An amount of 1.28 g of ethylene glycol diglycidyl ether (EX-810 manufactured by Nagase ChemteX Corporation) was dissolved in the resulting solution mixture to prepare a solution mixture of an epoxy monomer and a porogen.

Next, 1.70 g of polyethylenimine (EPOMIN SP-012 manufactured by NIPPON SHOKUBAI CO., LTD.) was added to the solution mixture to prepare a solution mixture of an epoxy monomer, an amine monomer, and a porogen. In this solution mixture, the ratio E/A of the equivalent E of the epoxy group included in the epoxy monomer to the equivalent A of active hydrogen of the primary amino group included in the amine monomer was 0.5.

Next, with a benchtop shaker (Angel Vibrator Digital 60 Hz) set to an intensity of 5, the solution mixture was shaken for 2 minutes. Then, the solution mixture was allowed to stand still in a thermostatic bath at 80°C for 2 hours to be cured. A block-shaped cured product including the polymer P having an amino group was obtained in this manner. This cured product was taken out of the screw cap vial and cut into approximately 3 mm square pieces. Next, an operation of immersing the cured product in ethyl acetate at 60°C for 1 hour was repeated twice with liquid replacement. As a result, the porogen was removed from the cured product to form a porous body including the polymer P. The porous body was dried at 60°C for 1 hour and further vacuum-dried for 2 hours. An acid gas adsorbent of Comparative Example 1 was obtained in this manner.

### (Example 1)

First, a porous body including the polymer P was produced in the same manner as in Comparative Example 1. Next, 1-ethyl-3-methylimidazolium bis(trifluoromethanesulfonyl)imide ([EMIm][TFSI]) as the liquid L was mixed with methanol to prepare a solution mixture. The content of the liquid L in the solution mixture was 1 wt%. Then, the porous body including the polymer P was immersed in the solution mixture for 18 hours at room temperature (20°C). The polymer P and the liquid L thereby came into contact and became miscible with each other. The solution mixture was transferred to a recovery flask, and the solvent was removed using an evaporator. The porous body was taken out of the recovery flask and subjected to a drying treatment at 60°C for 2 hours to give an acid gas adsorbent of Example 1 including the polymer P and the liquid L.

### (Examples 2 to 4)

Acid gas adsorbents of Examples 2 to 4 were obtained in the same manner as in Example 1, except that the type of liquid L used was changed as shown in Table 1.

It should be noted that the liquids L used in Examples 1 to 4 each have a boiling point significantly higher than 130°C.

### [Adsorption Amount of Carbon Dioxide]

Adsorption Test A described above was performed on the acid gas adsorbents produced in Examples and Comparative Example. In Adsorption Test A, the adsorption amount of carbon dioxide adsorbed by each acid gas adsorbent was measured over time. Table 1 shows the adsorption amount of carbon dioxide at 30 minutes, 60 minutes, 90 minutes, 240 minutes, and 900 minutes (15 hours) after the start of Adsorption Test A.

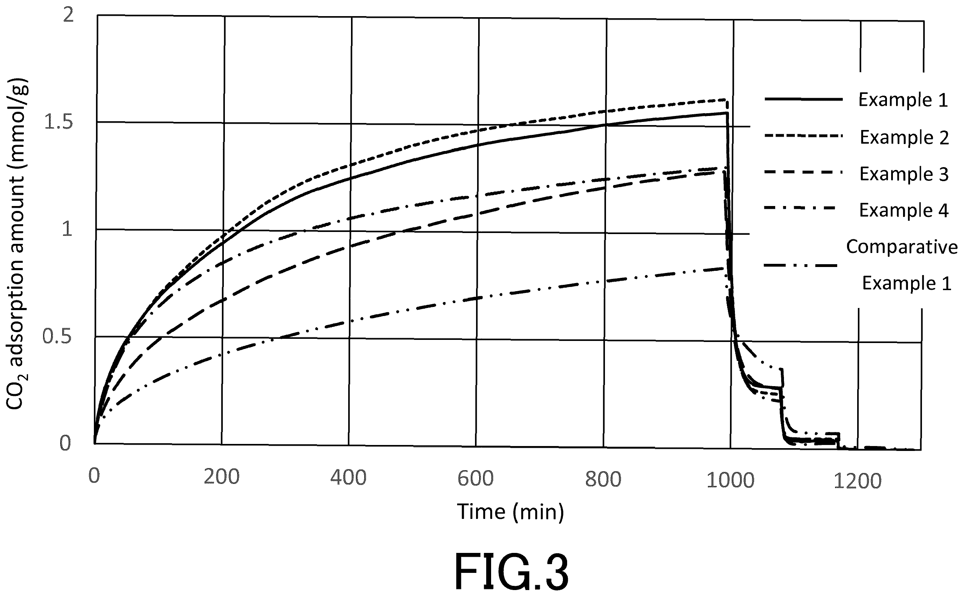

Furthermore, Adsorption Test B described above was performed on the acid gas adsorbents produced in Examples and Comparative Example. In Adsorption Test B, the adsorption amount of carbon dioxide adsorbed by each acid gas adsorbent was measured over time. In Adsorption Test B, after 900 minutes (15 hours) had elapsed from the start, the acid gas adsorbent was heated to 50 to 80°C so that carbon dioxide was desorbed from the acid gas adsorbent. Table 1 shows the adsorption amount of carbon dioxide at 30 minutes, 60 minutes, 90 minutes, 240 minutes, and 900 minutes (15 hours) after the start of Adsorption Test B. Moreover, FIG. 3 shows the relationship between the time elapsed from the start of Adsorption Test B and the adsorption amount of carbon dioxide.

**[Table 1]**

| | | | Comparative Example 1 | Example 1 | Example 2 | Example 3 | Example 4 |
|---|---|---|---|---|---|---|---|
| Liquid L | Type | | - | [EMIm] [TFSI] | [EMIm] [BF₄] | [P_{4,4,4,4}] [2,4MeSO₃] | [P_{6,6,6,14}] [Val] |
| | Content [wt%] | | - | 10 | 10 | 10 | 10 |
| | Adsorption Test A 20°C 50%RH | 30 min | 0.484 | 0.692 | 0.548 | 0.625 | 0.784 |
| | | 60 min | 0.846 | 1.158 | 1.003 | 1.068 | 1.383 |
| | | 90 min | 1.144 | 1.490 | 1.363 | 1.403 | 1.773 |
| | | 240 min | 1.957 | 2.070 | 2.005 | 2.157 | 2.333 |
| CO₂ adsorption amount [mmol/g] | | 900 min | 2.211 | 2.122 | 2.008 | 2.354 | 2.421 |
| | Adsorption Test B 20°C 20%RH | 30 min | 0.170 | 0.374 | 0.353 | 0.253 | 0.344 |
| | | 60 min | 0.237 | 0.535 | 0.527 | 0.375 | 0.509 |
| | | 90 min | 0.288 | 0.654 | 0.659 | 0.463 | 0.616 |
| | | 240 min | 0.459 | 1.028 | 1.070 | 0.736 | 0.905 |
| | | 900 min | 0.810 | 1.539 | 1.600 | 1.258 | 1.283 |

The abbreviations shown in Table 1 denote the following.
[EMIm][TFSI]: 1-ethyl-3-methylimidazolium bis(trifluoromethanesulfonyl)imide
[EMIm][BF_{4]}: 1-ethyl-3-methylimidazolium tetrafluoroborate
[P_{4,4,4,4}][2,4MeSO₃]: tetrabutylphosphonium 2,4-dimethylbenzenesulfonate
[P_{6,6,6,14}][Vail: trihexyl tetradecyl phosphonium valinate

As can be seen from Table 1 and FIG. 3, the adsorption amounts of carbon dioxide adsorbed in Adsorption Test B (particularly, the adsorption amounts b1 after 15 hours of Adsorption Test B) by the acid gas adsorbents of Examples including the liquid L tend to be larger than those adsorbed by the acid gas adsorbent of the Comparative Example. This indicates that a decrease of the acid gas adsorption performance under a low-humidity environment tends to be reduced for the acid gas adsorbents of Examples.

### INDUSTRIAL APPLICABILITY

The acid gas adsorbent of the present embodiment can adsorb carbon dioxide in atmospheric air.

## Claims

1. An acid gas adsorbent comprising:
a polymer having an amino group; and
a liquid having a boiling point of 130°C or higher, wherein
an adsorption amount a of carbon dioxide as determined by Adsorption Test A below performed for 15 hours is 0.35 mmol/g or more:
Adsorption Test A: a gas mixture G1 composed of carbon dioxide, nitrogen, and water vapor is continuously supplied into a container containing the acid gas adsorbent, where a concentration of the carbon dioxide in the gas mixture G1 is 400 vol ppm, and the gas mixture G1 has a temperature of 20°C and a humidity of 50%RH.

2. The acid gas adsorbent according to claim 1, wherein the polymer is a solid.

3. The acid gas adsorbent according to claim 1, wherein the polymer includes an amine polymer having a structural unit derived from an epoxy monomer.

4. The acid gas adsorbent according to claim 3, wherein the amine polymer includes a reaction product of a compound group including an amine monomer and an epoxy monomer.

5. The acid gas adsorbent according to claim 4, wherein the amine monomer includes polyethylenimine.

6. The acid gas adsorbent according to claim 1, wherein a glass transition temperature of the polymer is 40°C or lower.

7. The acid gas adsorbent according to claim 1, wherein the liquid includes an ionic liquid.

8. The acid gas adsorbent according to claim 7, wherein the ionic liquid has temperature responsiveness.

9. The acid gas adsorbent according to claim 1, wherein a content of the liquid is 1 wt% to 15 wt%.

10. The acid gas adsorbent according to claim 1, having a porous structure.

11. The acid gas adsorbent according to claim 1, wherein an adsorption amount b1 of carbon dioxide as determined by Adsorption Test B below performed for 15 hours is 0.1 mmol/g or more:
Adsorption Test B: a gas mixture G2 composed of carbon dioxide, nitrogen, and water vapor is continuously supplied into a container containing the acid gas adsorbent, where a concentration of the carbon dioxide in the gas mixture G2 is 400 vol ppm, and the gas mixture G2 has a temperature of 20°C and a humidity of 20%RH.

12. The acid gas adsorbent according to claim 11, wherein an adsorption amount b2 of carbon dioxide as determined by the Adsorption Test B performed for 1 hour is 0.01 mmol/g or more.

13. A structure comprising:
the acid gas adsorbent according to any one of claims 1 to 12; and
an air flow path.

14. An acid gas adsorption device comprising an adsorption part having a gas inlet and a gas outlet, wherein
the adsorption part contains the acid gas adsorbent according to any one of claims 1 to 12.
